# EUROPEAN PATENT APPLICATION

(11) **EP 4 659 992 A2**
(43) Date of publication of application: **10.12.2025**
(21) Application number: 25210979.8
(22) Date of filing: 27.05.2022
(51) Int. Cl.: B60L 50/50

(54) **FUEL CELL SHIP**

(30) Priority: 02.06.2021 JP 2021092711
(62) Divisional of application: 22175804.8
(71) Applicant: Yanmar Holdings Co., Ltd., Osaka-shi, Osaka (JP)
(72) Inventor: KIMURA, Yukihiko, Oita (JP); MARUYAMA, Takehiro, Osaka (JP); YAMAGUCHI, Yasuyoshi, Osaka (JP); HIRAIWA, Takuya, Osaka (JP); SHINAGAWA, Manabu, Osaka (JP); MORISHITA, Shoto, Osaka (JP); KOYAMA, Takahiro, Osaka (JP)
(74) Representative: Sekiguchi, Kazuya

(57) **Abstract**

[Problem] To provide a fuel cell ship capable of minimizing damage when a storage battery explodes for some reason.

[Solution] A fuel cell ship includes a storage battery compartment installed with a storage battery that supplies, to a propulsion device, electric power different from electric power by a fuel cell. The storage battery compartment is provided between a deck and a ship bottom portion of a hull.

## Description

### TECHNICAL FIELD

The present invention relates to a fuel cell ship.

### BACKGROUND ART

In the related art, a fuel cell ship in which a fuel gas (for example, hydrogen gas) is supplied from a fuel tank to a fuel cell and a propulsion device is driven by electric power generated by the fuel cell has been proposed (see, for example, Patent Document 1). Patent Document 1 also states that a secondary battery is used as an auxiliary power source for the fuel cell.

### PRIOR ART DOCUMENT

### PATENT DOCUMENT

Patent Document 1: Japanese Unexamined Patent Application Publication No. 2018-92815

### SUMMARY OF INVENTION

### TECHNICAL PROBLEM

In a fuel cell ship that uses a storage battery such as a secondary battery, it is necessary to take measures to minimize damage when the storage battery explodes for some reason.

The present invention has been made to solve the above-described problem, and an object of the present invention is to provide a fuel cell ship capable of minimizing damage when a storage battery explodes for some reason.

### SOLUTION TO PROBLEM

A fuel cell ship according to an aspect of the present invention is a fuel cell ship including, a fuel cell that generates electric power by an electrochemical reaction of fuel, and a propulsion device that generates propulsive force on a hull by electric power supplied from the fuel cell. The fuel cell ship further includes a storage battery compartment installed with a storage battery that supplies, to the propulsion device, electric power different from electric power by the fuel cell, and the storage battery compartment is provided between a deck and a ship bottom portion of the hull.

### ADVANTAGEOUS EFFECTS OF INVENTION

According to the above-described configuration, even if the storage battery explodes for some reason in the fuel cell ship, the damage can be minimized.

### BRIEF DESCRIPTION OF DRAWINGS

FIG. 1 is an explanatory diagram illustrating a schematic configuration of a fuel cell ship according to an embodiment of the present invention.
FIG. 2 is an explanatory diagram schematically illustrating an internal structure of the fuel cell ship.
FIG. 3 is an explanatory diagram schematically illustrating a configuration of a storage battery system included in the fuel cell ship.
FIG. 4 is an explanatory diagram schematically illustrating another configuration of the storage battery system.
FIG. 5 is a cross-sectional view illustrating a configuration example of a structure installed in a storage battery compartment of the storage battery system.
FIG. 6 is a perspective view illustrating a schematic configuration of the structure.
FIG. 7 is a cross-sectional view illustrating another configuration of the structure.
FIG. 8 is a cross-sectional view illustrating still another configuration of the structure.
FIG. 9 is a perspective view schematically illustrating an appearance of a storage battery housing supported by the structure.
FIG. 10 is an explanatory diagram schematically illustrating a modification of the installation position of the storage battery compartment.

### DESCRIPTION OF EMBODIMENTS

An embodiment of the present invention will be described below based on the drawings. In this description, direction is defined as follows. First, a direction from a stern to a bow of a fuel cell ship is "front", and a direction from the bow to the stern is "rear". A horizontal direction perpendicular to a front-rear direction is defined as a left-right direction. At this time, when the fuel cell ship is moving forward, the left side is defined as "left" and the right side is defined as "right" when viewed from the operator. The upstream side in the gravity direction perpendicular to the front-back direction and the left-right direction is referred to as "up", and the downstream side is referred to as "down".

### [1. Schematic Configuration of Fuel Cell Ship]

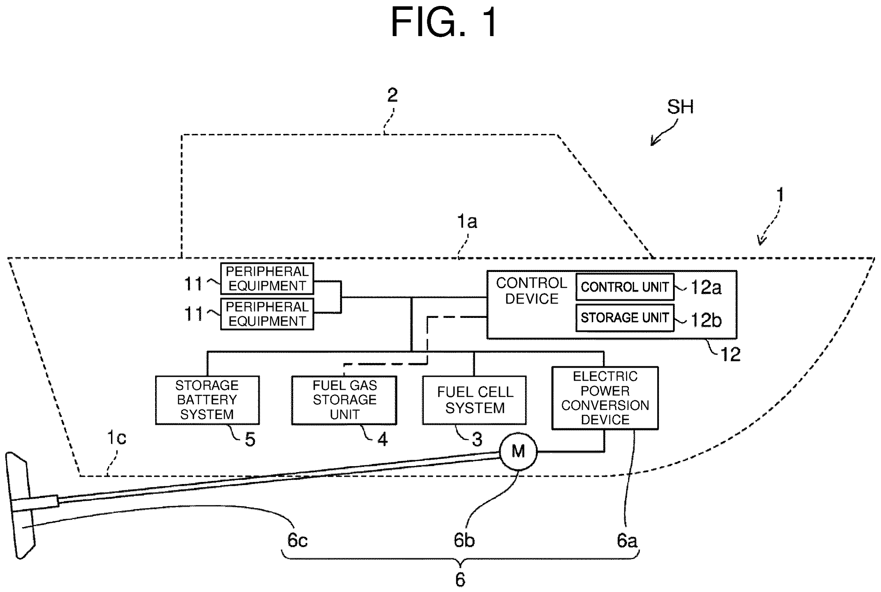

Firstly, a fuel cell ship SH according to the present embodiment will be described with reference to FIG. 1. FIG. 1 is an explanatory diagram illustrating a schematic configuration of the fuel cell ship SH. The fuel cell ship SH includes a hull 1 and a cabin 2. The cabin 2 is arranged on an upper surface of the hull 1.

The fuel cell ship SH further includes a fuel cell system 3, a fuel gas storage unit 4, a storage battery system 5, a propulsion device 6, a plurality of pieces of peripheral equipment 11, and a control device 12. In FIG. 1, a control signal or a high voltage power supply line is indicated by a solid line, and a control signal or a low voltage power supply line is indicated by a dashed line.

The fuel cell system 3 functions as a main power supply. The fuel cell system 3 consumes a fuel gas to generate electric power (specifically, DC electric power). The fuel gas is an example of a fuel, for example, a combustible gas. Typically, the fuel gas is hydrogen gas. The fuel cell system 3 supplies generated electric power to the propulsion device 6 and the peripheral equipment 11. The fuel cell system 3 can also supply electric power to the storage battery system 5 to charge the storage battery system 5.

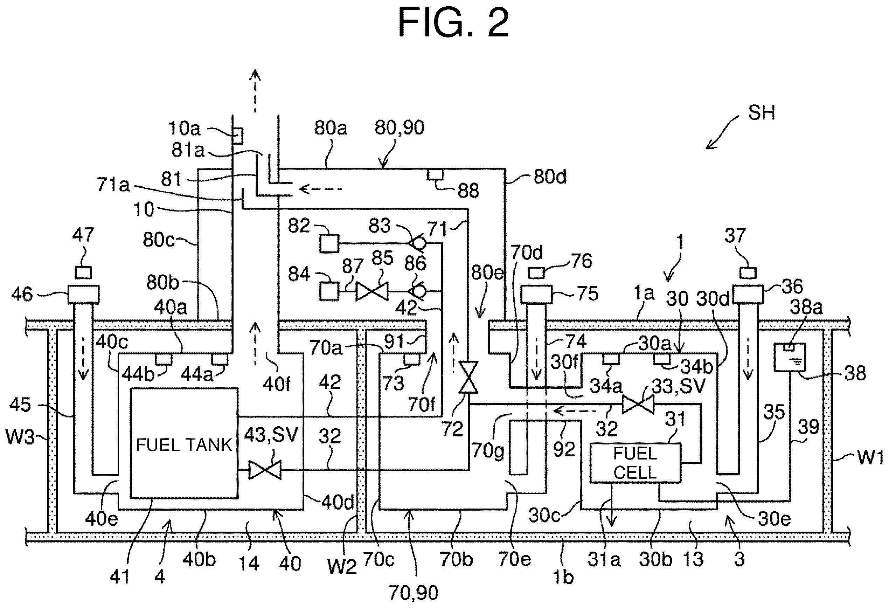

The fuel gas storage unit 4 stores the fuel gas to be supplied to the fuel cell system 3. The supply of fuel gas from the fuel gas storage unit 4 to the fuel cell system 3 is performed via a fuel gas supply pipe 32 described later (see FIG. 2).

The storage battery system 5 includes a storage battery. The storage battery is, for example, a lithium secondary battery, but may also be a nickel-cadmium storage battery, a nickel-hydrogen storage battery, or the like. The storage battery system 5 functions as an auxiliary power source for supplying the stored electric power (specifically, DC electric power) to the propulsion device 6 and the peripheral equipment 11. By the storage battery system 5 functioning as an auxiliary power source, it is possible to compensate for a shortage of electric power supplied from the fuel cell system 3 to the propulsion device 6 or the like. The storage battery system 5 may supply electric power to the control device 12.

The propulsion device 6 is driven by electric power supplied from a fuel cell 31 (described later) (see FIG. 2) of the fuel cell system 3, and generates a propulsive force on the hull 1. That is, the fuel cell ship SH includes the propulsion device 6 that generates a propulsive force on the hull 1 by the electric power supplied from the fuel cell 31.

The propulsion device 6 may be driven only by the electric power supplied from the storage battery included in the storage battery system 5, or may be driven by the electric power supplied from both the fuel cell 31 and the storage battery. That is, the propulsion device 6 may be driven by the electric power supplied from at least one of the fuel cell and the storage battery to generate the propulsive force on the hull 1.

The propulsion device 6 includes an electric power conversion device 6a, a propulsion motor 6b, and a propeller 6c. The electric power conversion device 6a converts the electric power supplied from the fuel cell system 3 into electric power according to the specifications of the propulsion motor 6b. For example, the electric power conversion device 6a converts DC electric power into AC electric power. In this case, the electric power conversion device 6a has, for example, an inverter. The propulsion motor 6b is driven by electric power (for example, AC electric power) supplied from the electric power conversion device 6a. When the propulsion motor 6b is driven, the rotational force of the propulsion motor 6b is transmitted to the propeller 6c. As a result, the propeller 6c rotates, and a propulsive force is generated on the hull 1. A configuration is also possible in which a marine gear is provided between the propulsion motor 6b and the propeller 6c.

Examples of the peripheral equipment 11 include a compressor, a solenoid valve, and a pump. Examples of the peripheral equipment 11 also include electrical equipment such as lighting equipment and air conditioning equipment, but the types of peripheral equipment 11 are not particularly limited.

The control device 12 controls the fuel cell system 3, the fuel gas storage unit 4, the storage battery system 5, the propulsion device 6, and the plurality of pieces of peripheral equipment 11. The control device 12 is composed of, for example, one or two or more computers. The computer is, for example, a Programmable Logic Controller (PLC), but may also be an Electronic Control Unit (ECU). The control device 12 is supplied with electric power from a battery (for example, a lead battery) (not illustrated) or the storage battery of the storage battery system 5.

The control device 12 has a control unit 12a and a storage unit 12b. The control unit 12a includes a processor such as a Central Processing Unit (CPU). The storage unit 12b includes a storage device and stores data and computer programs. Specifically, the storage unit 12b includes a main storage device such as a semiconductor memory and an auxiliary storage device such as a semiconductor memory, a solid state drive, and/or a hard disk drive. The storage unit 12b may also include removable media. The storage unit 12b corresponds to an example of a non-transitory computer-readable storage medium.

The processor of the control unit 12a executes a computer program stored in the storage device of the storage unit 12b, to control the fuel cell system 3, the fuel gas storage unit 4, the storage battery system 5, the propulsion device 6, and the plurality of pieces of peripheral equipment 11.

### [2. Internal Structure of Fuel Cell Ship]

Next, an internal structure of the fuel cell ship SH will be described with reference to FIG. 2. FIG. 2 is an explanatory diagram schematically illustrating the internal structure of the fuel cell ship SH. In FIG. 2, the air flow is indicated by a dashed line arrow. Each member is illustrated in FIG. 2 in which the right side of the drawing is the bow side and the left side of the drawing is the stern side. However, the position of each member is not limited to the position illustrated in FIG. 2 as long as the connection relationship between each member is maintained.

The fuel cell ship SH includes an engine room 13 and a fuel room 14. The engine room 13 and the fuel room 14 are arranged below a deck 1a of the hull 1. In other words, the engine room 13 and the fuel room 14 are arranged between the deck 1a and a bottom plate 1b of the hull 1. The bottom plate 1b is located between the deck 1a and the ship bottom portion 1c (see FIG. 1).

The engine room 13 is located on the bow side with respect to the fuel room 14. Below the deck 1a, partition walls W1, W2 and W3 are located in order from the bow side to the stern side. The engine room 13 is separated from other spaces by the partition walls W1 and W2. The fuel room 14 is separated from other spaces by the partition walls W2 and W3. The partition walls W1 to W3 are made of, for example, fiber reinforced plastics (FRP), but may be iron plates.

### (2-1. Configuration of Fuel Cell System)

The fuel cell system 3 of the fuel cell ship SH is located in the engine room 13. The fuel cell system 3 includes the fuel cell 31, the fuel gas supply pipe 32, and a fuel cell side shutoff valve 33. The fuel cell side shutoff valve 33 is an example of the peripheral equipment 11 (see FIG. 1).

The fuel cell 31 generates electric power (specifically, DC electric power) by an electrochemical reaction between the fuel gas being an example of fuel and an oxidant gas. Typically, the oxidant gas is air and the oxidant is oxygen. That is, the fuel cell ship SH includes the fuel cell 31 that generates electric power by an electrochemical reaction of fuel.

The fuel cell 31 is a fuel cell stack composed of a plurality of stacked cells. For example, each cell of the fuel cell 31 has a solid polymer electrolyte membrane, an anode electrode, a cathode electrode, and a pair of separators. The solid polymer electrolyte membrane is sandwiched between the anode electrode and the cathode electrode. The anode electrode is a negative electrode (fuel electrode). The anode electrode includes an anode catalyst layer and a gas diffusion layer. The cathode electrode is a positive electrode (air electrode). The cathode electrode includes a cathode catalyst layer and a gas diffusion layer. The anode electrode, the solid polymer electrolyte membrane, and the cathode electrode form a Membrane-Electrode Assembly (MEA). The pair of separators sandwich the membrane-electrode assembly. Each separator has a plurality of grooves. Each groove of one separator forms a flow path for the fuel gas. Each groove of the other separator forms a flow path for the oxidant gas.

In the configuration described above of the fuel cell 31, hydrogen included in the fuel gas is decomposed into hydrogen ions and electrons by the catalyst on the anode electrode side. Hydrogen ions pass through the solid polymer electrolyte membrane and move to the cathode electrode side. On the other hand, the electrons move to the cathode electrode side through an external circuit. As a result, an electric current is generated (electricity is generated). On the cathode electrode side, oxygen included in the oxidant gas combines with the electrons that flow through the external circuit and hydrogen ions that pass through the solid polymer electrolyte membrane to generate water. The generated water is discharged to the outside of the ship via a discharge pipe 31a.

The fuel cell 31 supplies generated electric power to the propulsion device 6 and the peripheral equipment 11 which are illustrated in FIG. 1. The fuel cell 31 may indirectly supply generated electric power to the propulsion device 6 and the peripheral equipment 11 via a circuit such as a DC/DC converter or the like.

The fuel gas supply pipe 32 is a pipe for supplying, to the anode electrode of the fuel cell 31, the fuel gas stored in a fuel tank 41 (described later) of the fuel gas storage unit 4.

The fuel cell side shutoff valve 33 is an example of a shutoff valve SV that opens or closes the flow path of the fuel gas supply pipe 32. The opening and closing of the fuel cell side shutoff valve 33 is controlled by the control unit 12a (see FIG. 1). Specifically, the fuel cell side shutoff valve 33 switches between supplying the fuel gas from the fuel tank 41 to the fuel cell 31 and stopping the supply of fuel gas based on the control of the control unit 12a. Although only one fuel cell side shutoff valve 33 is provided in the fuel gas supply pipe 32 in a fuel cell compartment 30 (described later), two or more may be provided.

The fuel cell ship SH further includes the fuel cell compartment 30. The fuel cell compartment 30 is a housing body for housing the fuel cell 31, and is arranged in the engine room 13.

The fuel cell compartment 30 has a hollow shape. For example, the fuel cell compartment 30 has a hollow and substantially rectangular parallelepiped shape. In this case, the outer walls of the fuel cell compartment 30 include, for example, a top wall 30a, a bottom wall 30b, a front wall (not illustrated), a back wall (not illustrated), a side wall 30c, and a side wall 30d. However, the top surface, bottom surface, front surface, back surface, and side surfaces of the fuel cell compartment 30 can be arbitrarily determined. The shape of the fuel cell compartment 30 is not particularly limited as long as the fuel cell compartment 30 has a space that can house the fuel cell 31. The fuel cell compartment 30 can also be considered as a container, chamber, or box for housing the fuel cell 31. The material of the outer wall of the fuel cell compartment 30 is, for example, FRP, but may be an iron plate.

A cell compartment air supply port 30e with an opening is provided on the side wall 30d of the fuel cell compartment 30. The cell compartment air supply port 30e is connected to a cell compartment air supply pipe 35, which will be described later. The cell compartment air supply port 30e may be provided on an outer wall other than the side wall 30d in the fuel cell compartment 30.

On the other hand, a cell compartment exhaust port 30f with an opening is provided on the side wall 30c of the fuel cell compartment 30. The cell compartment exhaust port 30f communicates with a duct compartment 90, which will be described later. The cell compartment exhaust port 30f may be provided on an outer wall other than the side wall 30c in the fuel cell compartment 30.

The fuel cell compartment 30 has an interior that is a closed space, with the exception of the cell compartment air supply port 30e and the cell compartment exhaust port 30f.

A part of the fuel gas supply pipe 32 described above and the fuel cell side shutoff valve 33 are housed in the fuel cell compartment 30. The fuel cell compartment 30 further houses a cell compartment internal gas detector 34a and a cell compartment internal fire detector 34b.

The cell compartment internal gas detector 34a is a fuel gas detector arranged inside the fuel cell compartment 30. For example, if the fuel gas is hydrogen gas, the cell compartment internal gas detector 34a includes a hydrogen gas detection sensor.

The cell compartment internal gas detector 34a is arranged on an inner surface of the top wall 30a located at an upper part of the fuel cell compartment 30. Hydrogen gas as the fuel gas is lighter than air and rises. Therefore, by arranging the cell compartment internal gas detector 34a on the top wall 30a of the fuel cell compartment 30, a leaked fuel gas can be reliably detected by the cell compartment internal gas detector 34a even if the fuel gas leaks in the fuel cell compartment 30.

If the cell compartment internal gas detector 34a detects the fuel gas in the fuel cell compartment 30, a detection signal is sent from the cell compartment internal gas detector 34a to the control unit 12a. As a result, the control unit 12a can control the fuel cell side shutoff valve 33 provided in the fuel gas supply pipe 32 to stop the supply of fuel gas from the fuel tank 41 to the fuel cell 31.

The cell compartment internal fire detector 34b is a fire detector arranged inside the fuel cell compartment 30. The cell compartment internal fire detector 34b includes, for example, one or more sensors among a smoke sensor for detecting smoke, a heat sensor for detecting heat, and a flame sensor for detecting flame. The cell compartment internal fire detector 34b may include a thermocouple type fire detector.

The cell compartment internal fire detector 34b is arranged on an inner surface of the top wall 30a located at an upper part of the fuel cell compartment 30. In the unlikely event that a fire occurs inside the fuel cell compartment 30, the cell compartment internal fire detector 34b detects the fire and outputs a detection signal indicating that a fire has occurred to the control unit 12a. In this case, the control unit 12a can control the fuel cell side shutoff valve 33 to stop the supply of fuel gas from the fuel tank 41 to the fuel cell 31. As a result, in the fuel cell compartment 30, the risk of explosion due to ignition of the fuel gas can be reduced as much as possible.

The cell compartment air supply pipe 35 is connected to the fuel cell compartment 30. The cell compartment air supply pipe 35 extends from the cell compartment air supply port 30e of the fuel cell compartment 30, to the deck 1a and is exposed from the upper surface of the deck 1a.

A cell compartment air supply device 36 and a cell compartment external gas detector 37 are arranged at an end portion on the deck 1a side of the cell compartment air supply pipe 35. The cell compartment air supply device 36 and the cell compartment external gas detector 37 are located above the deck 1a.

The cell compartment air supply device 36 includes, for example, an inexpensive non-explosion-proof air supply fan, but may include an explosion-proof air supply fan. The drive of the cell compartment air supply device 36 is controlled by the control unit 12a. One or more filters (not illustrated) may be arranged in the cell compartment air supply device 36. The filter removes, for example, dust or sea salt particles.

The cell compartment air supply device 36 supplies air outside the fuel cell compartment 30 to the inside of the fuel cell compartment 30 via the cell compartment air supply pipe 35 and the cell compartment air supply port 30e. The air inside the fuel cell compartment 30 is discharged to the duct compartment 90 via the cell compartment exhaust port 30f. In this way, the inside of the fuel cell compartment 30 is ventilated. As a result, it is possible to prevent combustible gas (for example, the fuel gas leaking from the fuel cell 31) from being retained in the fuel cell compartment 30.

The cell compartment external gas detector 37 detects combustible gas (for example, hydrogen gas floating around the hull 1) flowing into the fuel cell compartment 30 from the outside. The cell compartment external gas detector 37 is, for example, a combustible gas sensor such as a hydrogen gas sensor. The cell compartment external gas detector 37 is arranged on a side opposite to the cell compartment air supply pipe 35 with respect to the cell compartment air supply device 36, that is, on the upstream side of the air flow from the outside to the inside of the fuel cell compartment 30. The cell compartment external gas detector 37 may include a gas sensor that detects a combustible gas other than hydrogen gas. Examples of combustible gases other than hydrogen gas include methane, ethane, propane, and carbon monoxide.

The cell compartment external gas detector 37 outputs, for example, a detection signal indicating the concentration of combustible gas to the control unit 12a. As a result, the control unit 12a can determine, based on the detection signal, whether the concentration of the combustible gas is equal to or higher than a standard value. Then, if the concentration is equal to or higher than the standard value, the control unit 12a can control the fuel cell side shutoff valve 33 to stop the supply of fuel gas from the fuel tank 41 to the fuel cell 31. The above-mentioned standard value may be determined based on experiments and/or experience.

The fuel cell ship SH further includes a cooling medium tank 38 and a cooling medium pipe 39. The cooling medium tank 38 stores a cooling medium for cooling the fuel cell 31. The cooling medium is, for example, an antifreeze liquid having low electrical conductivity. The antifreeze liquid is, for example, a liquid obtained by mixing pure water and ethylene glycol in a predetermined ratio. The cooling medium tank 38 is sealed, but an upper portion may be open.

The cooling medium pipe 39 is a pipe for circulating the cooling medium between the fuel cell 31 and a heat exchanger (not illustrated). A circulation pump (not illustrated) is also provided at a location along the cooling medium pipe 39. The fuel cell 31 is cooled by driving the circulation pump to supply the cooling medium from the heat exchanger to the fuel cell 31 via the cooling medium pipe 39. The cooling medium supplied for cooling the fuel cell 31 is also supplied, via the cooling medium pipe 39, to the cooling medium tank 38, at which a volume change due to a temperature change of the cooling medium is absorbed and the amount of the cooling medium liquid is monitored.

A cooling tank internal gas detector 38a is provided in an upper portion inside the cooling medium tank 38. The cooling tank internal gas detector 38a is a fuel gas detector that detects the fuel gas existing in the cooling medium tank 38. As the fuel gas existing in the cooling medium tank 38, for example, a fuel gas which is leaked in the fuel cell 31 and then enters into the cooling medium tank 38 via the cooling medium pipe 39 can be considered. The fuel gas detection result (for example, fuel gas concentration information) by the cooling tank internal gas detector 38a is sent to the control unit 12a. As a result, the control unit 12a determines, based on the detection result of the cooling tank internal gas detector 38a, whether there is a fuel gas leak in the fuel cell 31, and if there is a leak, the control unit 12a can, for example, perform control to stop electric power generation by the fuel cell 31.

### (2-2. Configuration of Fuel Gas Storage Unit)

The fuel gas storage unit 4 of the fuel cell ship SH includes the fuel tank 41, a gas filling pipe 42, and a tank side shutoff valve 43. The tank side shutoff valve 43 is an example of the peripheral equipment 11.

The fuel tank 41 stores the fuel (for example, the fuel gas) to be supplied to the fuel cell 31. In FIG. 2, for convenience, only one fuel tank 41 is illustrated, but the number of fuel tanks 41 is not particularly limited and there may be a plurality of the fuel tanks 41.

The gas filling pipe 42 is a pipe for replenishing the fuel tank 41 with the fuel gas or filling the fuel tank 41 with an inert gas. One end side of the gas filling pipe 42 is connected to the fuel tank 41. The other end side of the gas filling pipe 42 is branched into two, and these ends are connected to a fuel gas filling port 82 and an inert gas filling port 84, respectively. The fuel gas filling port 82 and the inert gas filling port 84 are provided in the duct compartment 90 (particularly, an upper duct compartment 80) described later.

The above-mentioned inert gas is, for example, nitrogen gas. For example, if the fuel gas remains in the fuel tank 41 when performing maintenance such as inspection or repair of the fuel cell ship SH in the dock (dry dock), there is a danger that an explosion may occur when the fuel gas ignites for some reason. Therefore, at the time of maintenance of the fuel cell ship SH, the fuel tank 41 is filled with the inert gas, and the fuel gas is removed from the fuel tank 41. As a result, it possible to avoid the danger of explosion.

In the fuel gas supply pipe 32 described above, a side opposite to the connection side with the fuel cell 31 is connected to the fuel tank 41. That is, the fuel tank 41 and the fuel cell 31 are connected via the fuel gas supply pipe 32.

The tank side shutoff valve 43 is an example of a shutoff valve SV that opens or closes the flow path of the fuel gas supply pipe 32. The opening and closing of the tank side shutoff valve 43 is controlled by the control unit 12a. More specifically, the tank side shutoff valve 43 switches between supplying the fuel gas from the fuel tank 41 to the fuel cell 31 and stopping the supply of fuel gas based on the control of the control unit 12a. Although only one tank side shutoff valve 43 is provided in the fuel gas supply pipe 32 in a tank compartment 40 described later, two or more tank side shutoff valves 43 may be provided.

That is, it can be said that the fuel gas supply pipe 32 connecting the fuel tank 41 and the fuel cell 31 has at least two shutoff valves SV. The at least two shutoff valves SV include the fuel cell side shutoff valve 33 and the tank side shutoff valve 43.

The fuel cell ship SH further includes the tank compartment 40. The tank compartment 40 is a housing body that houses the fuel tank 41. The tank compartment 40 is arranged in the fuel room 14.

The tank compartment 40 has a hollow shape. For example, the tank compartment 40 has a hollow and substantially rectangular parallelepiped shape. In this case, the outer walls of the tank compartment 40 include, for example, a top wall 40a, a bottom wall 40b, a front wall (not illustrated), a back wall (not illustrated), a side wall 40c, and a side wall 40d. However, the top surface, bottom surface, front surface, back surface, and side surfaces of the tank compartment 40 can be arbitrarily determined. The shape of the tank compartment 40 is not particularly limited as long as the tank compartment 40 has a space that can house at least one fuel tank 41. The tank compartment 40 can also be considered as a container, chamber, or box for housing the fuel tank 41. The material of the outer wall of the tank compartment 40 is, for example, FRP, but may be an iron plate.

A tank compartment air supply port 40e with an opening is provided on the side wall 40c of the tank compartment 40. The tank compartment air supply port 40e is connected to a tank compartment air supply pipe 45 described later. The tank compartment air supply port 40e may be provided on an outer wall other than the side wall 40c in the tank compartment 40.

On the other hand, a tank compartment exhaust port 40f with an opening is provided on the top wall 40a of the tank compartment 40. The tank compartment exhaust port 40f communicates with a vent pipe 10. The vent pipe 10 is a pipe for guiding air inside the tank compartment 40 to the outside of the ship. The tank compartment exhaust port 40f may be provided on an outer wall other than the top wall 40a in the tank compartment 40.

The tank compartment 40 has an interior that is a closed space except for the tank compartment air supply port 40e and the tank compartment exhaust port 40f.

A part of the fuel gas supply pipe 32 described above and the tank side shutoff valve 43 are housed in the tank compartment 40. The tank compartment 40 further houses a tank compartment internal gas detector 44a and a tank compartment internal fire detector 44b.

The tank compartment internal gas detector 44a is a fuel gas detector arranged inside the tank compartment 40. For example, if the fuel gas is hydrogen gas, the tank compartment internal gas detector 44a includes a hydrogen gas detection sensor.

The tank compartment internal gas detector 44a is arranged on the top wall 40a located at the upper part of the tank compartment 40 to be close to the tank compartment exhaust port 40f or inside the tank compartment exhaust port 40f. In the unlikely event that the fuel gas leaks from the fuel tank 41 in the tank compartment 40, the leaked fuel gas goes toward the vent pipe 10 through the tank compartment exhaust port 40f. That is, the tank compartment exhaust port 40f is located on the most downstream side of the flow path through which the fuel gas flows when the fuel gas leaks inside the tank compartment 40. Therefore, by arranging the tank compartment internal gas detector 44a at a position near the tank compartment exhaust port 40f or inside the tank compartment exhaust port 40f, a fuel gas leaked in the tank compartment 40 can be reliably detected by the tank compartment internal gas detector 44a located on the most downstream side of the flow path, regardless of where the fuel gas leaks.

If the tank compartment internal gas detector 44a detects the fuel gas inside the tank compartment 40, a detection signal is sent from the tank compartment internal gas detector 44a to the control unit 12a. As a result, the control unit 12a can control the tank side shutoff valve 43 provided in the fuel gas supply pipe 32 to stop the supply of fuel gas from the fuel tank 41 to the fuel cell 31.

The tank compartment internal fire detector 44b is a fire detector arranged inside the tank compartment 40. The tank compartment internal fire detector 44b includes, for example, one or more sensors among a smoke sensor for detecting smoke, a heat sensor for detecting heat, and a flame sensor for detecting flame. The tank compartment internal fire detector 44b may include a thermocouple type fire detector.

The tank compartment internal fire detector 44b is arranged on an inner surface of the top wall 40a located at an upper part of the tank compartment 40. In the unlikely event that a fire occurs inside the tank compartment 40, the tank compartment internal fire detector 44b detects the fire and outputs a detection signal indicating that a fire has occurred to the control unit 12a. In this case, the control unit 12a can control the tank side shutoff valve 43 to stop the supply of fuel gas from the fuel tank 41 to the fuel cell 31. As a result, in the tank compartment 40, the risk of explosion due to ignition of the fuel gas can be reduced as much as possible.

The tank compartment air supply pipe 45 is connected to the tank compartment 40. The tank compartment air supply pipe 45 extends from the tank compartment air supply port 40e of the tank compartment 40 to the deck 1a, and is exposed from an upper surface of the deck 1a.

A tank compartment air supply device 46 and a tank compartment external gas detector 47 are arranged at an end portion on the deck 1a side of the tank compartment air supply pipe 45. The tank compartment air supply device 46 and the tank compartment external gas detector 47 are located above the deck 1a.

The tank compartment air supply device 46 includes, for example, an inexpensive non-explosion-proof air supply fan, but may include an explosion-proof air supply fan. The drive of the tank compartment air supply device 46 is controlled by the control unit 12a. One or more filters (not illustrated) may be arranged in the tank compartment air supply device 46. The filter removes, for example, dust or sea salt particles.

The tank compartment air supply device 46 supplies air outside the tank compartment 40 to the inside of the tank compartment 40 via the tank compartment air supply pipe 45 and the tank compartment air supply port 40e. The air inside the tank compartment 40 is discharged to the vent pipe 10 via the tank compartment exhaust port 40f. In this way, the inside of the tank compartment 40 is ventilated. As a result, even if the fuel gas leaks from the fuel tank 41 in the tank compartment 40, the retention of the fuel gas can be suppressed.

The tank compartment external gas detector 47 detects combustible gas (for example, hydrogen gas floating around the hull 1) flowing into the tank compartment 40 from the outside. The tank compartment external gas detector 47 is, for example, a combustible gas sensor such as a hydrogen gas sensor. The tank compartment external gas detector 47 is arranged on a side opposite to the tank compartment air supply pipe 45 with respect to the tank compartment air supply device 46, that is, on the upstream side of the air flow from the outside to the inside of the tank compartment 40. The tank compartment external gas detector 47 may include a gas sensor that detects a combustible gas other than hydrogen gas.

The tank compartment external gas detector 47 outputs, for example, a detection signal indicating the concentration of combustible gas to the control unit 12a. As a result, the control unit 12a can determine, based on the detection signal, whether the concentration of the combustible gas is equal to or higher than a standard value. Then, if the concentration is equal to or higher than the standard value, the control unit 12a can control the tank side shutoff valve 43 to stop the supply of fuel gas from the fuel tank 41 to the fuel cell 31. The above-mentioned standard value may be determined based on experiments and/or experience.

### (2-3. Duct Compartment)

The fuel cell ship SH further includes a lower duct compartment 70 and the upper duct compartment 80. Here, the lower duct compartment 70 and the upper duct compartment 80 are collectively referred to as a duct compartment 90. The duct compartment 90 is a housing body that houses various pipes. For example, the duct compartment 90 houses a part of the fuel gas supply pipe 32. The inside of the lower duct compartment 70 and the inside of the upper duct compartment 80 communicate with each other via a duct communication portion 91. In the following, details of the lower duct compartment 70 and the upper duct compartment 80 will be described.

### <2-3-1. Lower Duct Compartment>

The lower duct compartment 70 is located below the deck 1a. More specifically, the lower duct compartment 70 is arranged in the engine room 13. In the engine room 13, the lower duct compartment 70 is located on the stern side with respect to the fuel cell compartment 30. That is, below the deck 1a, the lower duct compartment 70 is located between the fuel cell compartment 30 and the tank compartment 40. The lower duct compartment 70 houses a part of the fuel gas supply pipe 32 and a part of the gas filling pipe 42.

Here, the "part of the fuel gas supply pipe 32" housed in the lower duct compartment 70 refers to a portion of the fuel gas supply pipe 32 located between the fuel cell compartment 30 and the tank compartment 40. The "part of the gas filling pipe 42" housed in the lower duct compartment 70 refers to a portion of the gas filling pipe 42 located between the tank compartment 40 and the upper duct compartment 80.

The material of the lower duct compartment 70 is, for example, FRP, but may be an iron plate. The lower duct compartment 70 has a hollow shape. For example, the lower duct compartment 70 has a hollow and substantially rectangular parallelepiped shape. In this case, the outer walls of the lower duct compartment 70 include, for example, a top wall 70a, a bottom wall 70b, a front wall (not illustrated), a back wall (not illustrated), a side wall 70c, and a side wall 70d. However, the top surface, bottom surface, front surface, back surface, and side surfaces of the lower duct compartment 70 can be arbitrarily determined. The shape of the lower duct compartment 70 is not particularly limited as long as the lower duct compartment 70 has a space that can house a part of the fuel gas supply pipe 32 and the like. The lower duct compartment 70 can also be regarded as a container, a chamber, or a box for housing a part of the fuel gas supply pipe 32 and the like.

A lower duct compartment air supply port 70e with an opening is provided in the side wall 70d of the lower duct compartment 70. The lower duct compartment air supply port 70e is connected to a lower duct compartment air supply pipe 74 described later. The lower duct compartment air supply port 70e may be provided on an outer wall other than the side wall 70d in the lower duct compartment 70.

On the other hand, a lower duct compartment communication port 70f with an opening is provided in the top wall 70a of the lower duct compartment 70. The lower duct compartment communication port 70f communicates with the duct communication portion 91 described above. The lower duct compartment communication port 70f may be provided on an outer wall other than the top wall 70a in the lower duct compartment 70.

A cell compartment communication port 70g with an opening is provided in the side wall 70d of the lower duct compartment 70. The cell compartment communication port 70g is connected to the cell compartment exhaust port 30f of the fuel cell compartment 30 described above via a communication pipe 92. As a result, the air inside the fuel cell compartment 30 flows into the lower duct compartment 70 via the cell compartment exhaust port 30f, the communication pipe 92, and the cell compartment communication port 70g. The cell compartment communication port 70g may be provided on an outer wall other than the side wall 70d in the lower duct compartment 70.

The communication pipe 92 includes, for example, a double pipe having an inner pipe and an outer pipe. Examples of the inner pipe include the fuel gas supply pipe 32. The outer pipe is located on the outside of the inner pipe in the radial direction. The gas inside the fuel cell compartment 30 travels between the inner pipe and the outer pipe of the communication pipe 92, from the cell compartment exhaust port 30f to the cell compartment communication port 70g of the lower duct compartment 70.

The lower duct compartment 70 has a closed space inside except for the lower duct compartment air supply port 70e, the lower duct compartment communication port 70f, and the cell compartment communication port 70g.

The lower duct compartment 70 houses a part of a fuel gas discharge pipe 71. The fuel gas discharge pipe 71 is a pipe provided by branching from the fuel gas supply pipe 32 located in the lower duct compartment 70. For example, the fuel gas discharge pipe 71 is provided by branching from the fuel gas supply pipe 32 between the two shutoff valves SV.

More specifically, the fuel gas discharge pipe 71 is provided by branching from the fuel gas supply pipe 32 between the tank side shutoff valve 43 in the tank compartment 40 and the fuel cell side shutoff valve 33 in the fuel cell compartment 30. The fuel gas discharge pipe 71 extends from the inside of the lower duct compartment 70 to the inside of the upper duct compartment 80 via the lower duct compartment communication port 70f and the duct communication portion 91, and further communicates with the inside of the vent pipe 10. Therefore, the "part of the fuel gas discharge pipe 71" housed in the lower duct compartment 70 refers to a portion of the fuel gas discharge pipe 71 located between the point of the branching from the fuel gas supply pipe 32 and the upper duct compartment 80.

The lower duct compartment 70 further houses a release valve 72. The release valve 72 is an on-off valve installed in the fuel gas discharge pipe 71 to open or close the flow path of the fuel gas discharge pipe 71. The release valve 72 is an example of peripheral equipment 11. The opening and closing of the release valve 72 are controlled by the control unit 12a. The release valve 72 may be installed in the upper duct compartment 80.

The lower duct compartment 70 further houses a lower duct compartment internal gas detector 73. The lower duct compartment internal gas detector 73 is a fuel gas detector arranged inside the lower duct compartment 70. For example, if the fuel gas is hydrogen gas, the lower duct compartment internal gas detector 73 includes a hydrogen gas detection sensor.

The lower duct compartment internal gas detector 73 is arranged on the top wall 70a located at an upper portion of the lower duct compartment 70 to be close to the lower duct compartment communication port 70f or inside the lower duct compartment communication port 70f. In the unlikely event that the fuel gas leaks from the fuel gas supply pipe 32 in the lower duct compartment 70, the leaked fuel gas goes toward the upper duct compartment 80 through the lower duct compartment communication port 70f. That is, the lower duct compartment communication port 70f is located on the most downstream side of the flow path through which the fuel gas flows when the fuel gas leaks in the lower duct compartment 70. Therefore, by arranging the lower duct compartment internal gas detector 73 at a position close to the lower duct compartment communication port 70f or inside the lower duct compartment communication port 70f, a fuel gas leaked in the lower duct compartment 70 can be reliably detected by the lower duct compartment internal gas detector 73 located on the most downstream side of the flow path, regardless of where the fuel gas leaks.

If the lower duct compartment internal gas detector 73 detects the fuel gas in the lower duct compartment 70, a detection signal is sent from the lower duct compartment internal gas detector 73 to the control unit 12a. As a result, the control unit 12a can control the shutoff valves SV provided in the fuel gas supply pipe 32 to stop the supply of fuel gas from the fuel tank 41 to the fuel cell 31.

The lower duct compartment 70 may further house a fire detector that detects a fire inside the lower duct compartment 70.

The lower duct compartment air supply pipe 74 is connected to the lower duct compartment 70. The lower duct compartment air supply pipe 74 extends from the lower duct compartment air supply port 70e of the lower duct compartment 70 to the deck 1a and is exposed from the upper surface of the deck 1a.

A lower duct compartment air supply device 75 and a lower duct compartment external gas detector 76 are arranged at an end portion on the deck 1a side of the lower duct compartment air supply pipe 74. The lower duct compartment air supply device 75 and the lower duct compartment external gas detector 76 are located above the deck 1a.

The lower duct compartment air supply device 75 includes, for example, an inexpensive non-explosion-proof air supply fan, but may include an explosion-proof air supply fan. The drive of the lower duct compartment air supply device 75 is controlled by the control unit 12a. One or more filters (not illustrated) may be arranged in the lower duct compartment air supply device 75. The filter removes, for example, dust or sea salt particles.

The lower duct compartment air supply device 75 supplies the air outside the lower duct compartment 70 (duct compartment 90) to the inside of the lower duct compartment 70 via the lower duct compartment air supply pipe 74 and the lower duct compartment air supply port 70e. The air inside the lower duct compartment 70 is discharged to the upper duct compartment 80 through the lower duct compartment communication port 70f. In this way, the inside of the lower duct compartment 70 is ventilated. As a result, even if the fuel gas leaks from the fuel gas supply pipe 32 in the lower duct compartment 70, retention of the fuel gas can be suppressed.

The lower duct compartment external gas detector 76 detects combustible gas (for example, hydrogen gas floating around the hull 1) flowing into the duct compartment 90 from the outside. The lower duct compartment external gas detector 76 is, for example, a combustible gas sensor such as a hydrogen gas sensor. The lower duct compartment external gas detector 76 is arranged on a side opposite to the lower duct compartment air supply pipe 74 with respect to the lower duct compartment air supply device 75, that is, on the upstream side of the air flow from the outside to the inside of the duct compartment 90. The lower duct compartment external gas detector 76 may include a gas sensor that detects a combustible gas other than hydrogen gas.

The lower duct compartment external gas detector 76 outputs, for example, a detection signal indicating the concentration of combustible gas to the control unit 12a. As a result, the control unit 12a can determine, based on the detection signal, whether the concentration of the combustible gas is equal to or higher than a standard value. Then, if the concentration is equal to or higher than the standard value, the control unit 12a can control the shutoff valves SV to stop the supply of fuel gas from the fuel tank 41 to the fuel cell 31. The above-mentioned standard value may be determined based on experiments and/or experience.

### <2-3-2. Upper Duct Compartment>

The upper duct compartment 80 is located on the deck 1a. More specifically, the upper duct compartment 80 is arranged on the deck 1a to cover an area partially including the lower duct compartment 70 and the tank compartment 40. The upper duct compartment 80 houses a part of the fuel gas discharge pipe 71 and a part of the gas filling pipe 42.

Here, the "part of the fuel gas discharge pipe 71" housed in the upper duct compartment 80 refers to a portion of the fuel gas discharge pipe 71 that extends from the lower duct compartment 70 toward the vent pipe 10. The "part of the gas filling pipe 42" housed in the upper duct compartment 80 refers to a portion of the gas filling pipe 42 that extends from the lower duct compartment 70 to the fuel gas filling port 82 described later.

The material of the upper duct compartment 80 is, for example, FRP, but may be an iron plate. The upper duct compartment 80 has a hollow shape. For example, the upper duct compartment 80 has a hollow and substantially rectangular parallelepiped shape. In this case, the outer walls of the upper duct compartment 80 include, for example, a top wall 80a, a bottom wall 80b, a front wall (not illustrated), a back wall (not illustrated), a side wall 80c, and a side wall 80d. However, the top surface, bottom surface, front surface, back surface, and side surfaces of the upper duct compartment 80 can be arbitrarily determined. The shape of the upper duct compartment 80 is not particularly limited as long as the upper duct compartment 80 has a space that can house a part of the fuel gas discharge pipe 71 and the like. The upper duct compartment 80 can also be regarded as a container, a chamber, or a box for housing the part of the fuel gas discharge pipe 71 and the like.

The fuel gas discharge pipe 71, as described above, communicates with the inside of the vent pipe 10. Thus, when the release valve 72 is opened, the gas inside the fuel gas discharge pipe 71 (for example, the fuel gas) flows from an end portion 71a of the fuel gas discharge pipe 71 into the vent pipe 10 and is released from the vent pipe 10 to the outside of the ship. Here, it is desirable that, in the vent pipe 10, the end portion 71a of the fuel gas discharge pipe 71 faces upward, that is, faces the open port side of the vent pipe 10. In this case, the discharge direction of gas discharged from the end portion 71a of the fuel gas discharge pipe 71 is upward.

For example, if the fuel gas is discharged sideways from the end portion 71a of the fuel gas discharge pipe 71, the discharged fuel gas reaches the inner wall surface of the vent pipe 10 and then flows downward. This may result in unwanted detection by the tank compartment internal gas detector 44a in the tank compartment 40. By the end portion 71a of the fuel gas discharge pipe 71 facing upward inside the vent pipe 10 as described above, it is possible to reduce unwanted detection by the tank compartment internal gas detector 44a due to the fuel gas discharged from the end portion 71a.

An upper duct compartment air supply port 80e with an opening is provided in the bottom wall 80b of the upper duct compartment 80. The upper duct compartment air supply port 80e communicates with the duct communication portion 91. Therefore, the upper duct compartment 80 communicates with the lower duct compartment 70 via the upper duct compartment air supply port 80e, the duct communication portion 91, and the lower duct compartment communication port 70f. The upper duct compartment air supply port 80e may be provided on an outer wall other than the bottom wall 80b in the upper duct compartment 80.

The upper duct compartment 80 has a vent pipe communication portion 81. The vent pipe communication portion 81 is a pipe by which the inside of the upper duct compartment 80 communicates with the vent pipe 10. In FIG. 2, the vent pipe communication portion 81 is illustrated as having a shape bent upward from the horizontal orientation, but the shape of the vent pipe communication portion 81 is not limited to the shape in FIG. 2. The reason why the vent pipe communication portion 81 is bent upward is similar to the reason why the end portion 71a of the fuel gas discharge pipe 71 is bent upward. That is, the vent pipe communication portion 81 is bent upward to reduce unwanted detection by the tank compartment internal gas detector 44a due to the fuel gas discharged from the vent pipe communication portion 81, which will be described later.

The vent pipe 10 extends upward from the tank compartment 40 and passes through the interior of the upper duct compartment 80. More specifically, the vent pipe 10 passes through the bottom wall 80b of the upper duct compartment 80, enters the inside of the vent pipe 10, and passes through the top wall 80a. The vent pipe communication portion 81 is provided in the upper duct compartment 80 to penetrate through the side wall of the vent pipe 10. As a result, the upper duct compartment 80 communicates with the vent pipe 10 via the vent pipe communication portion 81.

Therefore, the air inside the upper duct compartment 80 is discharged to the outside of the ship through the vent pipe communication portion 81 and the vent pipe 10. In this way, it is possible to ventilate the inside of the upper duct compartment 80. If the fuel gas leaks from the fuel gas discharge pipe 71 in the upper duct compartment 80, the leaked fuel gas is discharged to the outside of the ship through the vent pipe communication portion 81 and the vent pipe 10. In this way, it is possible to prevent the leaked fuel gas from being retained in the upper duct compartment 80.

The upper duct compartment 80 and the lower duct compartment 70 communicate with each other via the duct communication portion 91. As a result, (1) air taken into the inside of the lower duct compartment 70 via the lower duct compartment air supply pipe 74, (2) a fuel gas leaked from the fuel gas supply pipe 32 in the lower duct compartment 70 for some reason, and (3) air or a fuel gas discharged from the fuel cell compartment 30 to the lower duct compartment 70 via the communication pipe 92 can be discharged to the outside of the ship via the upper duct compartment 80 and the vent pipe 10. In this way, it is possible to suppress the retention of the fuel gas inside the lower duct compartment 70 and inside the fuel cell compartment 30.

The fuel gas filling port 82 and a fuel gas check valve 83 are provided in the upper duct compartment 80. The fuel gas filling port 82 is connected to the gas filling pipe 42. The fuel gas check valve 83 is provided in the gas filling pipe 42. More specifically, the fuel gas check valve 83 is located between the point where an inert gas pipe 87 (described later) branches from the gas filling pipe 42 and the fuel gas filling port 82.

The fuel gas supplied from the fuel gas filling port 82 travels through the fuel gas check valve 83 and the gas filling pipe 42, and is supplied to the fuel tank 41 in the tank compartment 40. As a result, the fuel gas is filled in the fuel tank 41 and stored. The fuel gas check valve 83 is provided to prevent backflow of the fuel gas from the fuel tank 41 side to the fuel gas filling port 82.

The upper duct compartment 80 is further provided with the inert gas filling port 84, an on-off valve 85, an inert gas check valve 86, and the inert gas pipe 87. The inert gas filling port 84 is connected to the inert gas pipe 87. The inert gas pipe 87 is provided by branching from the gas filling pipe 42 in the upper duct compartment 80. The on-off valve 85 and the inert gas check valve 86 are provided in the inert gas pipe 87. In the inert gas pipe 87, the on-off valve 85 is located between the inert gas filling port 84 and the inert gas check valve 86.

The on-off valve 85 opens or closes the flow path of the inert gas pipe 87. In a configuration in which the inert gas check valve 86 is provided in the inert gas pipe 87, installation of the on-off valve 85 may be omitted.

When inert gas is supplied to the inert gas filling port 84 and the on-off valve 85 opens the flow path of the inert gas pipe 87 in a state in which the fuel gas is not supplied to the fuel gas filling port 82, the inert gas is supplied to the fuel tank 41 in the tank compartment 40 through the inert gas check valve 86, and via the inert gas pipe 87 and the gas filling pipe 42. In addition, the tank side shutoff valve 43 opens the flow path of the fuel gas supply pipe 32, the fuel cell side shutoff valve 33 closes the flow path of the fuel gas supply pipe 32, and the release valve 72 opens the flow path of the fuel gas discharge pipe 71, whereby the fuel gas remaining in the fuel tank 41 is discharged to the vent pipe 10 via the fuel gas supply pipe 32 and the fuel gas discharge pipe 71. As a result, the fuel gas can be removed from the fuel tank 41 (purge process).

There may be a pipe from the gas filling pipe 42 that is directly connected to the fuel gas supply pipe 32 between the fuel tank 41 and the tank side shutoff valve 43 (tank method). In this configuration, when performing a purge process for the fuel tank 41 using the inert gas, it is necessary to fill the fuel tank 41 with the inert gas in a state in which the tank side shutoff valve 43 is closed, and after that, to open the tank side shutoff valve 43 for the purpose of facilitating the release of the inert gas from the fuel tank 41.

The fuel gas filling port 82 and the inert gas filling port 84 are provided in the upper duct compartment 80 as described above. More specifically, the fuel gas filling port 82 and the inert gas filling port 84 are located at a boundary surface between the inside and the outside of the upper duct compartment 80. That is, "the fuel gas filling port 82 and the inert gas filling port 84 are provided in the upper duct compartment 80" includes a case where the fuel gas filling port 82 and the inert gas filling port 84 are provided at the boundary surface of the upper duct compartment 80.

An upper duct compartment internal gas detector 88 is housed in the upper duct compartment 80. The upper duct compartment internal gas detector 88 is a fuel gas detector arranged inside the upper duct compartment 80. For example, if the fuel gas is hydrogen gas, the upper duct compartment internal gas detector 88 includes a hydrogen gas detection sensor.

The upper duct compartment internal gas detector 88 is arranged on the top wall 80a located in an upper portion of the upper duct compartment 80. Hydrogen gas as the fuel gas is lighter than air and rises. Therefore, if the fuel gas leaks in the upper duct compartment 80, the leaked fuel gas can be reliably detected by the upper duct compartment internal gas detector 88. To more reliably detect the fuel gas leaked in the upper duct compartment 80, the upper duct compartment internal gas detector 88 may be arranged at a position close to the vent pipe communication portion 81.

If the upper duct compartment internal gas detector 88 detects the fuel gas in the upper duct compartment 80, a detection signal is sent from the upper duct compartment internal gas detector 88 to the control unit 12a. As a result, the control unit 12a can control the shutoff valves SV provided in the fuel gas supply pipe 32 to stop the supply of fuel gas from the fuel tank 41 to the fuel cell 31.

The upper duct compartment 80 may further house a fire detector that detects a fire inside the upper duct compartment 80.

### (2-4. Supplementary Information about Vent Pipe)

Inside the vent pipe 10, a vent pipe internal gas detector 10a is provided further on the downstream side than a discharge port 81a of the vent pipe communication portion 81. The downstream side refers to the downstream side in the air flow direction when the air inside the tank compartment 40 flows inside the vent pipe 10 and is discharged to the outside of the ship. For example, if the fuel gas is hydrogen gas, the vent pipe internal gas detector 10a includes a diffusion type or suction type hydrogen gas detection sensor. A detection signal from the vent pipe internal gas detector 10a is sent to the control unit 12a.

For example, in a state where the control unit 12a outputs a signal (closing signal) for closing the release valve 72, if the vent pipe internal gas detector 10a detects the fuel gas even though the tank compartment internal gas detector 44a and the upper duct compartment internal gas detector 88 do not detect the fuel gas, it is possible to determine that the release valve 72 is not completely blocking the flow path of the fuel gas discharge pipe 71, that is, the release valve 72 is malfunctioning. In this case, by sending a notification to the outside, for example, the control unit 12a can prompt a maintenance person to inspect, repair, or replace the release valve 72. The notification to the outside includes a monitor display, output of an alarm sound, transmission of information to an external terminal, and the like.

### [3. Storage Battery System]

### (3-1. Configuration of Storage Battery System)

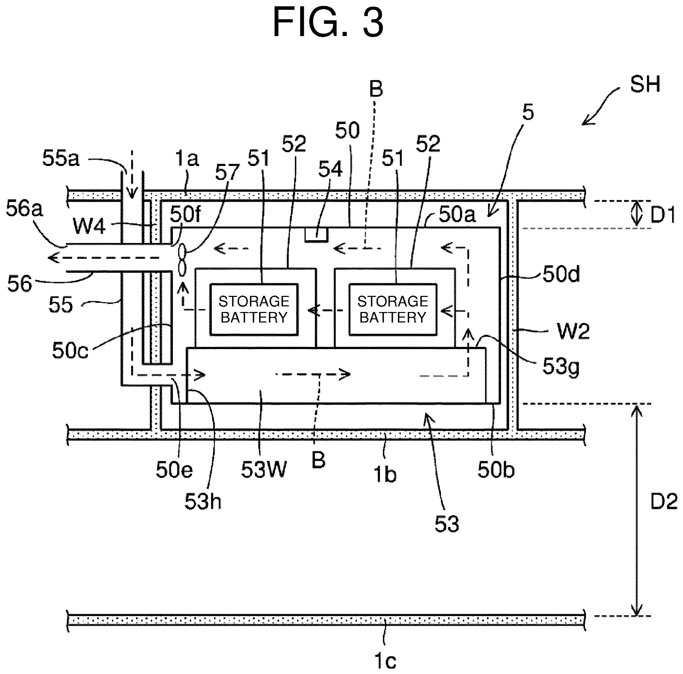

Next, a configuration of the storage battery system 5 will be described. FIG. 3 is an explanatory diagram schematically illustrating a configuration of the storage battery system 5. In FIG. 3, the air flow is indicated by a dashed line arrow. The storage battery system 5 is located directly below the deck 1a. More specifically, the storage battery system 5 is located between the deck 1a and the bottom plate 1b, and between the partition wall W2 and a partition wall W4. The partition wall W4 is located on the stern side with respect to the partition wall W2. The partition wall W4 is made of, for example, FRP, but may be an iron plate.

Here, the tank compartment 40, the fuel cell compartment 30, and the duct compartment 90 described above can be considered to form a set, and the fuel cell ship SH of the present embodiment includes two such sets. These sets are arranged so that compartments of the same type are arranged side by side in the left-right direction. That is, the two tank compartments 40 are located side by side in the left-right direction. Similarly, the two fuel cell compartments 30 are also located side by side in the left-right direction. Further, the two duct compartments 90 are also located side by side in the left-right direction. Then, ventilation (exhaust) inside each of these compartments is performed for each set.

The storage battery system 5 has a storage battery compartment 50. The details of the storage battery compartment 50 will be described later. The storage battery compartment 50 is located between the two tank compartments 40 arranged side by side in the left-right direction. That is, unlike the other compartments (the tank compartments 40, the fuel cell compartments 30, the duct compartments 90), only one storage battery compartment 50 is provided. Therefore, the partition wall W4 illustrated in FIG. 3 may be a partition wall different from the partition wall W3 illustrated in FIG. 2, or may be the same partition wall. However, the storage battery compartment 50 and the tank compartment 40 on the right side are separated by another partition wall, and the storage battery compartment 50 and the tank compartment 40 on the left side are further separated by another partition wall.

Therefore, in the fuel cell ship SH of the present embodiment, it can be said that the tank compartment 40, the fuel cell compartment 30, the duct compartment 90, and the storage battery compartment 50 are provided independently of each other. That is, the fuel cell ship SH includes a plurality of compartments provided independently of each other. Hereinafter, the details of the storage battery system 5 will be described.

The storage battery system 5 has a storage battery 51. As described above, the storage battery 51 includes, for example, a lithium secondary battery. In the present embodiment, the storage battery system 5 has two storage batteries 51, but the number of storage batteries 51 is not particularly limited and may be one, or three or more. The capacity of each of the storage batteries 51 can also be appropriately set. If there are a plurality of storage batteries 51, the storage batteries 51 may be connected in series or in parallel. In the present embodiment, two storage batteries 51 are connected in parallel in consideration of the specifications of a step-down device (not illustrated) that steps down the voltage output from the storage batteries 51.

The storage battery 51, as described above, supplies stored electric power to the propulsion device 6 (see FIG. 1) and the like. The electric power stored in the storage battery 51 is different from the electric power generated by the fuel cell 31. The storage battery compartment 50 is a housing body that houses such a storage battery 51. That is, the plurality of compartments of the fuel cell ship SH include the storage battery compartment 50 in which the storage battery 51 that supplies electric power different from that of the fuel cell 31 to the propulsion device 6 is installed.

The storage battery compartment 50 has a hollow shape. For example, the storage battery compartment 50 has a hollow and substantially rectangular parallelepiped shape. In this case, the outer walls of the storage battery compartment 50 include, for example, a top wall 50a, a bottom wall 50b, a front wall (not illustrated), a back wall (not illustrated), a side wall 50c, and a side wall 50d. However, the top surface, bottom surface, front surface, back surface, and side surfaces of the storage battery compartment 50 can be arbitrarily determined. The shape of the storage battery compartment 50 is not particularly limited as long as the storage compartment 50 has a space that can house at least one storage battery 51. The storage battery compartment 50 can also be considered as a container, chamber, or box for housing the storage battery 51. The material of the outer wall of the storage battery compartment 50 is, for example, FRP, but may be an iron plate.

A storage battery compartment air supply port 50e with an opening is provided on the side wall 50c of the storage battery compartment 50. The storage battery compartment air supply port 50e is connected to a storage battery compartment air supply pipe 55, which will be described later. The storage battery compartment air supply port 50e may be provided on an outer wall other than the side wall 50c in the storage battery compartment 50.

A storage battery compartment exhaust port 50f with an opening is also provided on the side wall 50c of the storage battery compartment 50. The storage battery compartment exhaust port 50f is connected to a storage battery compartment exhaust pipe 56, which will be described later. The storage battery compartment exhaust port 50f is located upward of the storage battery compartment air supply port 50e in the side wall 50c. As a result, even in the unlikely event that a gas lighter than air enters inside the storage battery compartment 50 via the storage battery compartment air supply port 50e, the gas can be easily discharged from the storage battery compartment exhaust port 50f via the storage battery compartment exhaust pipe 56. The storage battery compartment exhaust port 50f may be provided on an outer wall other than the side wall 50c in the storage battery compartment 50.

The storage battery compartment 50 has an interior that is a closed space, with the exception of the storage battery compartment air supply port 50e and the storage battery compartment exhaust port 50f.

The above-described storage battery compartment 50 is located directly below the deck 1a. More specifically, the storage battery compartment 50 is provided between the deck 1a and the ship bottom portion 1c of the hull 1. More specifically, the storage battery compartment 50 is provided between the deck 1a and the ship bottom portion 1c, at a position closer to the deck 1a than the ship bottom portion 1c. When the storage battery compartment 50 is arranged in this way, the relationship D1 < D2 holds, where D1 is a separation distance (mm) between the storage battery compartment 50 and the deck 1a in the vertical direction, and D2 is a separation distance (mm) between the storage battery compartment 50 and the ship bottom portion 1c in the vertical direction.

In the present embodiment, the storage battery compartment 50 in which the storage battery 51 is installed is provided independently of other compartments (for example, the tank compartment 40, the fuel cell compartment 30, and the duct compartment 90). As a result, even if the storage battery 51 explodes for some reason, the adverse effect (damage) on other compartments can be minimized. In particular, since the storage battery compartment 50 is provided between the deck 1b and the ship bottom portion 1c, even if the storage battery 51 explodes for some reason, it is possible to prevent damage to persons on the deck 1a as compared with a configuration in which the storage battery 51 is provided on the deck 1a, for example. Further, since the storage battery compartment 50 is provided at a position closer to the deck 1a than the ship bottom portion 1c, even if the storage battery 51 explodes for some reason, the damage to the ship bottom portion 1c is minimized and the risk of sinking of the fuel cell ship SH can be reduced.

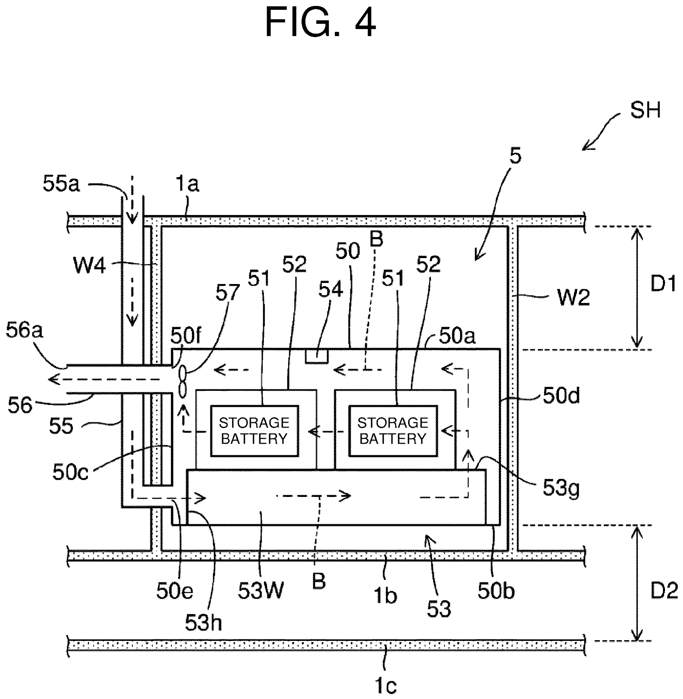

FIG. 4 is an explanatory diagram schematically illustrating another configuration of the storage battery system 5. As illustrated in the figure, the storage battery compartment 50 may be provided between the deck 1a and the ship bottom portion 1c, at a position closer to the ship bottom portion 1c than the deck 1a. In this case, the relationship between D1 and D2 is D1 > D2.

When the storage battery compartment 50 is provided closer to the ship bottom portion 1c than the deck 1a, even if the storage battery 51 explodes for some reason, the risk of damage to persons staying at or passing through the deck 1a can be reduced.

The above-described storage battery 51 is housed in a storage battery housing 52. The storage battery housing 52 is made of a resin such as FRP or a metal. That is, the fuel cell ship SH includes the storage battery housing 52 that houses the storage battery 51. The storage battery 51 is installed in the storage battery compartment 50, together with the storage battery housing 52. In the present embodiment, the two storage batteries 51 are housed in separate storage battery housings 52, respectively. The storage battery housings 52 are arranged side by side in the front-rear direction inside the storage battery compartment 50. Each storage battery housing 52 is installed inside the storage battery compartment 50 by using one structure 53. The details of the structure 53 will be described later.

The storage battery 51 is housed in a double structure consisting of the storage battery housing 52 and the storage battery compartment 50, because of which even if the storage battery 51 explodes for some reason, damage to the hull 1 due to the explosion can be minimized.

A storage battery compartment internal fire detector 54 is housed in the storage battery compartment 50. The storage battery compartment internal fire detector 54 is a fire detector arranged inside the storage battery compartment 50. The storage battery compartment internal fire detector 54 includes, for example, one or more sensors among a smoke sensor for detecting smoke, a heat sensor for detecting heat, and a flame sensor for detecting flame. The storage battery compartment internal fire detector 54 may include a thermocouple type fire detector.

The storage battery compartment internal fire detector 54 is arranged on an inner surface of the top wall 50a located at an upper portion of the storage battery compartment 50. In the unlikely event that a fire occurs inside the storage battery compartment 50, the storage battery compartment internal fire detector 54 detects the fire and outputs a detection signal indicating that a fire has occurred to the control unit 12a. In this case, the control unit 12a can control the tank side shutoff valve 43 and the fuel cell side shutoff valve 33 to stop the supply of fuel gas from the fuel tank 41 to the fuel cell 31. As a result, the power generation in the fuel cell 31 can be reliably stopped.

The storage battery compartment air supply pipe 55 is connected to the storage battery compartment 50. The storage battery compartment air supply pipe 55 is a pipe for introducing air into the storage battery compartment 50 from the outside of the ship, and is located on the stern side with respect to the storage battery compartment 50 and communicates with the inside of the storage battery compartment 50. That is, the fuel cell ship SH of the present embodiment includes the storage battery compartment air supply pipe 55 that communicates with the storage battery compartment 50. The storage battery compartment air supply pipe 55 extends from the storage battery compartment air supply port 50e of the storage battery compartment 50 to the deck 1a, and is exposed from the upper surface of the deck 1a.

The storage battery compartment exhaust pipe 56 is connected to the storage battery compartment 50. The storage battery compartment exhaust pipe 56 is a pipe for guiding the air inside the storage battery compartment 50 to the outside of the ship, and is located on the stern side with respect to the storage battery compartment 50 and communicates with the inside of the storage battery compartment 50. That is, the fuel cell ship SH of the present embodiment includes the storage battery compartment exhaust pipe 56 that communicates with the storage battery compartment 50.

The storage battery compartment exhaust pipe 56 extends from the storage battery compartment exhaust port 50f of the storage battery compartment 50 toward the stern side. Therefore, in the present embodiment, the storage battery compartment exhaust pipe 56 and the storage battery compartment air supply pipe 55 (both) are located on the stern side with respect to the storage battery compartment 50.

An exhaust fan 57 is provided inside the storage battery compartment 50. The drive of the exhaust fan 57 is controlled by the control unit 12a. By the driving of the exhaust fan 57, the air outside the storage battery compartment 50 is introduced into the storage battery compartment air supply pipe 55 via an air supply inlet 55a, and is supplied to the inside of the storage battery compartment 50 via the storage battery compartment air supply port 50e. Then, the air inside the storage battery compartment 50 is guided to the storage battery compartment exhaust pipe 56 via the storage battery compartment exhaust port 50f, and is discharged to the outside via an exhaust outlet 56a. As a result, the inside of the storage battery compartment 50 is ventilated. As described above, the fuel cell ship SH includes the exhaust fan 57 that evacuates the inside of the storage battery compartment 50.

The exhaust fan 57 may be provided outside the storage battery compartment 50. For example, the exhaust fan 57 may be installed in the middle of the storage battery compartment exhaust pipe 56 that communicates with the storage battery compartment 50.

The fuel cell ship SH includes the storage battery compartment exhaust pipe 56, because of which, for example, even if a gas harmful to the human body is generated in the storage battery compartment 50 due to evaporation of the electrolyte contained in the storage battery 51, the gas can be discharged to the outside via the storage battery compartment exhaust pipe 56. This makes it possible to reduce the harmful effect of the gas on the human body. In the unlikely event that the storage battery 51 in the storage battery compartment 50 explodes, the blast wave can be discharged via the storage battery compartment exhaust pipe 56. That is, the storage battery compartment exhaust pipe 56 can also be used as an escape for the blast wave.

Also, the fuel cell ship SH includes the exhaust fan 57, because of which even if a harmful gas is generated inside the storage battery compartment 50, the gas can be reliably discharged to the outside by the exhaust fan 57. When the exhaust fan 57 is used, the pressure in the storage battery compartment 50 becomes equal to or less than the atmospheric pressure, unlike the case where an air supply fan is used. Therefore, using the exhaust fan 57 also has the advantage that, in an unlikely event that a leak hole is made in the outer wall of the storage battery compartment 50, harmful gas does not leak from the storage battery compartment 50 to the outside of the outer wall through the leak hole.

In the storage battery compartment 50, unlike the tank compartment 40 and the like, there is a low possibility of the presence of a combustible gas such as hydrogen gas inside. As a result, in the storage battery compartment 50, there is no need to worry about ignition of the combustible gas due to driving of the exhaust fan. Therefore, in the storage battery compartment 50, unlike the tank compartment 40 and the like, it is possible to proactively adopt a configuration in which the exhaust fan 57 being non-explosion-proof is installed.

### (3-2. Ventilation Path in Storage Battery Compartment)

In the present embodiment, as illustrated by the dashed line arrow in FIG. 3, a ventilation path B is provided by which air is taken into the storage battery compartment 50 from the stern side, the air is then guided to the bow side inside the storage battery compartment 50 and returned from the bow side to the stern side to be discharged to the outside of the ship. Such a ventilation path B is realized by arranging the structure 53 inside the storage battery housing 50.

### <3-2-1. One Configuration Example of Structure>

As illustrated in FIGS. 3 and 4, the structure 53 is located inside the storage battery compartment 50 and supports the storage battery housing 52 from below. In the storage battery compartment 50, the structure 53 is located between the bottom wall 50b and the storage battery housing 52. That is, inside the storage battery compartment 50, the structure 53 that is located between the bottom wall 50b of the storage battery compartment 50 and the storage battery housing 52, and that supports the storage battery housing 52 at a position higher than the bottom wall 50b of the storage battery compartment 50 is provided.

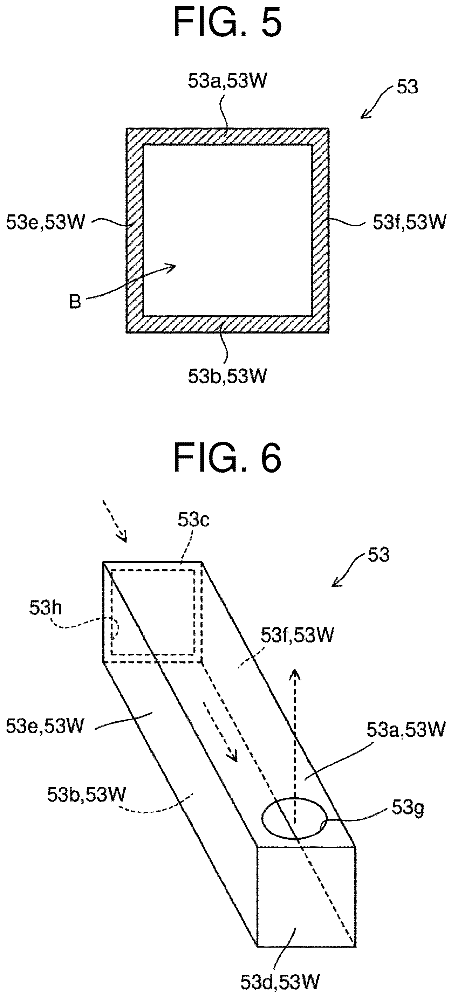

The structure 53 has an outer wall portion 53W. The outer wall portion 53W forms the outer wall of the ventilation path B for the air flowing from the stern side to the bow side inside the storage battery compartment 50. FIG. 5 is a cross-sectional view of the structure 53. In the present embodiment, the outer wall portion 53W of the structure 53 has a frame-shaped cross section perpendicular to the ventilation direction of the air flowing from the stern side to the bow side through the ventilation path B.

Two structures 53 are arranged on the bottom wall 50b of the storage battery compartment 50. The structures 53 are located apart from each other in the left-right direction. The number of the structures 53 is not limited to two, and may be one, or three or more. Hereinafter, the details of the structure 53 will be described.

FIG. 6 is a perspective view illustrating a schematic configuration of the structure 53. The structure 53 is formed by a hollow tubular body having a substantially rectangular parallelepiped shape. More specifically, the structure 53 has an upper wall 53a, a lower wall 53b, and side walls 53c to 53f. The upper wall 53a and the lower wall 53b are located to face each other in the vertical direction. The side wall 53c and the side wall 53d are located between the upper wall 53a and the lower wall 53b to face each other in the front-rear direction (the ventilation direction), and are connected to the upper wall 53a and the lower wall 53b. The side wall 53e and the side wall 53f are located between the upper wall 53a and the lower wall 53b to face each other in the left-right direction, and are connected to the upper wall 53a and the lower wall 53b. The side wall 53c is connected to the stern-side end portion of the side wall 53e, and is also connected to the stern-side end portion of the side wall 53f. The side wall 53d is connected to the bow-side end portion of the side wall 53e, and is also connected to the bow-side end portion of the side wall 53f.

An opening portion 53g is formed on the bow side of the upper wall 53a. The structure 53 is arranged in the storage battery compartment 50 so that the opening portion 53g is located more to the bow side than one of the storage battery housings 52 located closest to the end of the ship on the bow side (see FIG. 3).

Further, a structure air supply port 53h with an opening is formed in the side wall 53c on the stern side. No opening portion is formed in the side wall 53d on the bow side facing the side wall 53c. Instead of providing the opening portion 53g in the upper wall 53a, an opening portion may be formed in the side wall 53d. Alternatively, as long as air can be circulated through the storage battery housing 52, an opening portion may be formed in the left and right side walls of the structure 53, that is, in the side wall 53e or the side wall 53f. However, the opening portion is formed in the vicinity of the side wall 53d.

In the structure 53, the walls other than the side wall 53c on which the structure air supply port 53h is formed, that is, the upper wall 53a, the lower wall 53b, and the side walls 53d to 53f constitute the outer wall portion 53W that is the outer wall of the ventilation path B.

The flow of air in the storage battery compartment 50 will be described with reference to FIGS. 3 to 6. When the exhaust fan 57 is driven, air is aspirated from the storage battery compartment air supply pipe 55 into the storage battery compartment 50 via the storage battery compartment air supply port 50e. The aspirated air enters the inside of the structure 53 located downward of the storage battery housing 52 via the structure air supply port 53h. Then, the air flows inside the structure 53 from the stern side toward the bow side. That is, the air flows downward of the storage battery housing 52 from the stern side toward the bow side.

The air reaches the side wall 53d on the bow side of the structure 53, changes the movement direction, passes through the opening portion 53g of the upper wall 53a, and flows upward. The air flowing out upward of the structure 53 flows inside the storage battery housing 50 from the bow side to the stern side, and is discharged to the outside of the ship via the storage battery compartment exhaust port 50f and the storage battery compartment exhaust pipe 56.

From the above, it can be said that the structure 53 has the following outer wall portion 53W. That is, the structure 53 has the outer wall portion 53W that forms the outer wall of the ventilation path B through which, in the storage battery compartment 50, the air supplied from the storage battery compartment air supply pipe 55 flows downward of the storage battery housing 52, from the stern side to the bow side of the storage battery housing 52.

As a result of the structure 53 thus having the outer wall portion 53W, the air introduced into the storage battery compartment 50 flows inside the structure 53, that is, flows through the ventilation path B formed by the outer wall portion 53W from the stern side to the bow side. In this way, inside the storage battery compartment 50, the air that has exited from the structure 53 can flow from the bow side to the stern side, and can be discharged to the outside from the storage battery compartment exhaust pipe 56. That is, even if the storage battery compartment exhaust pipe 56 and the storage battery compartment air supply pipe 55 are located on the stern side with respect to the storage battery compartment 50, air can be circulated in the storage battery compartment 50 in the order of the stern side, the bow side, and the stern side, to ventilate the inside of the storage battery compartment 50.

Therefore, even if the storage battery compartment exhaust pipe 56 and the storage battery compartment air supply pipe 55 are located on the stern side, the gas harmful to the human body generated in the storage battery compartment 50 can be discharged to the outside from the storage battery compartment 50. Such a configuration is particularly very effective when there is a situation in which the storage battery compartment air supply pipe 55 cannot be installed on the bow side with respect to the storage battery compartment 50. For example, if the storage battery compartment air supply pipe 55 is installed on the bow side with respect to the storage battery compartment 50, there may be a case where placing the air supply inlet 55a of the storage battery compartment air supply pipe 55 in a hazardous location within 1.5 m from the installation position of non explosion-proof electrical equipment, cannot be avoided. Since such an installation is not allowed, the above-described configuration of the present embodiment is very effective.

The storage battery housing 52 is supported by the structure 53 at a position higher than the bottom wall 50b of the storage battery compartment 50. That is, the structure 53 is interposed between the bottom wall 50b of the storage battery compartment 50 and the storage battery housing 52. As a result.for example, even if water (rainwater, seawater, or the like) enters inside the storage battery compartment 50 for some reason, it is possible to buy as much time as the height of the structure 53 until the infiltrated water comes in contact with the storage battery housing 52. In this way, the storage battery 51 housed in the storage battery housing 52 can be prevented from coming in contact with the infiltrated water as much as possible, and the inconvenience of not being able to use the storage battery 51 due to being immersed can be avoided as much as possible. That is, by using the structure 53, it is possible to provide the ventilation path B and also prevent the storage battery 51 from being submerged.

As described above, the outer wall portion 53W of the structure 53 has a frame-shaped cross section perpendicular to the ventilation direction (see FIG. 5). In such a configuration, the structure 53 can be used alone to provide the ventilation path B from the stern side to the bow side.

### <3-2-2. Other Configuration Examples of Structure>

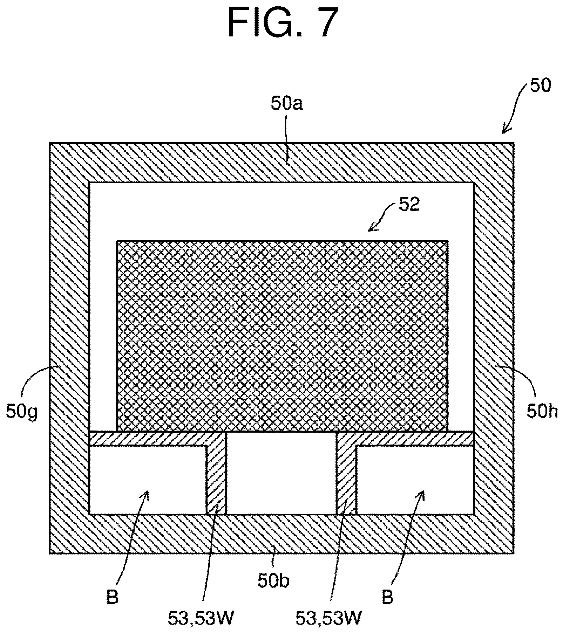

FIG. 7 is a cross-sectional view illustrating another configuration of the structure 53. The outer wall portion 53W of the structure 53 may have an L-shaped cross section perpendicular to the ventilation direction. The L shape includes all shapes that are point-symmetrical, line-symmetrical, and rotationally-symmetrical to the L shape. In this configuration, as illustrated in the FIG. 7, the space surrounded by the outer wall portion 53W and the wall portion of the storage battery compartment 50 located facing the outer wall portion 53W can be provided as the ventilation path B from the stern side to the bow side. Specifically, a space surrounded by the outer wall portion 53W. the bottom wall 50b, and a right side wall 50g can be provided as the ventilation path B. Moreover, a space surrounded by the outer wall portion 53W, the bottom wall 50b, and a left side wall 50h can be provided as the ventilation path B.

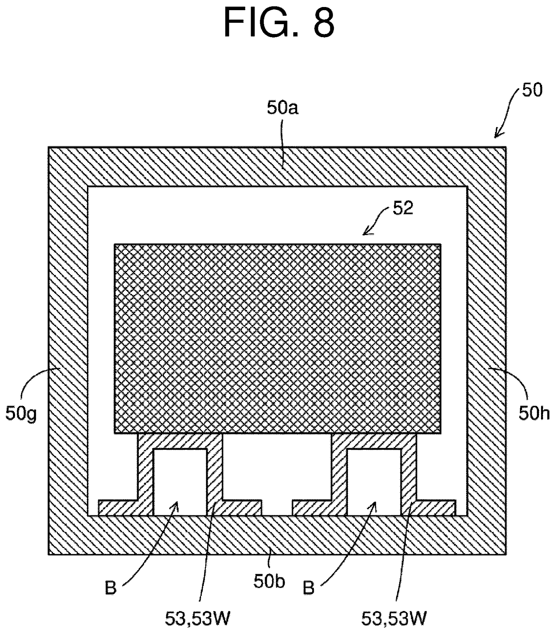

FIG. 8 is a cross-sectional view illustrating still another configuration of the structure 53. The outer wall portion 53W of the structure 53 may have a U-shaped cross section perpendicular to the ventilation direction. The U shape includes all shapes that are point-symmetrical, line-symmetrical, and rotationally-symmetrical to the U-shape. In this configuration, as illustrated in FIG. 8, the space surrounded by the U-shaped outer wall portion 53W and the wall portion of the storage battery compartment 50 that closes the U-shaped opening (for example, the bottom wall 50b) can be provided as the ventilation path B from the stern side to the bow side.

In this way, the outer wall portion 53W of the structure 53 may have an L-shaped or U-shaped cross section perpendicular to the ventilation direction of the air flowing from the stern side to the bow side through the ventilation path B. Even if the structure 53 with the outer wall portion 53W having the above-described shape is used, the ventilation path B can be provided by a combination of the outer wall portion 53W and the wall portion of the storage battery compartment 50. That is, the ventilation path B can be provided even if the cross section of the outer wall portion 53W dose not have a closed shape.

### <3-2-3. Details of Storage Battery Housing>

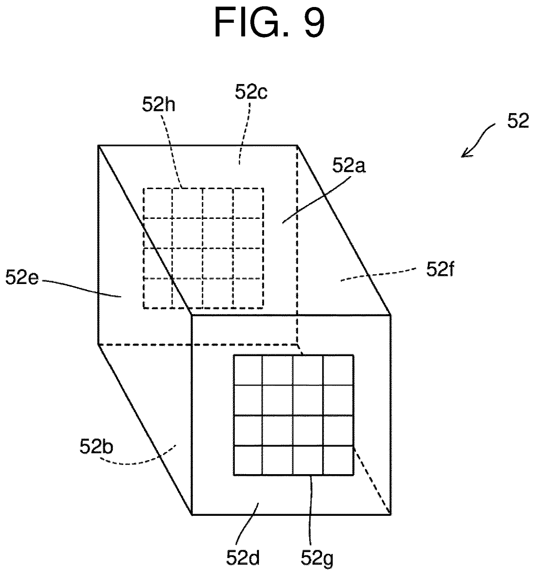

Next, the description of the storage battery housing 52 described above will be supplemented. FIG. 9 is a perspective view schematically illustrating an appearance of the storage battery housing 52. The storage battery housing 52 is formed in a hollow substantially rectangular parallelepiped shape. More specifically, the storage battery housing 52 has a top wall 52a, a bottom wall 52b, and side walls 52c to 52f. The top wall 52a and the bottom wall 52b are located to face each other in the vertical direction. The side wall 52c and the side wall 52d are located between the top wall 52a and the bottom wall 52b to face each other in the front-rear direction. Of the side walls 52c and 52d, the side wall 52d is a side wall located on the bow side, and the side wall 52c is a side wall located on the stern side.

The side wall 52e and the side wall 52f are located between the top wall 52a and the bottom wall 52b to face each other in the left-right direction. The side walls 52c to 52f connect the top wall 52a and the bottom wall 52b in the vertical direction. In addition, the side wall 52c is connected to the stern-side end portion of the side wall 52e and the stern-side end portion of the side wall 52f. The side wall 52d is connected to the bow-side end portion of the side wall 52e and the bow-side end portion of the side wall 52f.

The side wall 52d on the bow side has a storage battery housing air supply port 52g. The side wall 52c on the stern side has a storage battery housing exhaust port 52h. The storage battery housing air supply port 52g and the storage battery housing exhaust port 52h are formed by, for example, a mesh-like lattice in which a plurality of opening portions are arranged in a two-dimensional manner. However, the storage battery housing air supply port 52g and the storage battery housing exhaust port 52h may be formed by a vertical lattice or a horizontal lattice in which rectangular opening portions are arranged side by side in one direction, or may be formed by a simple opening (a single opening portion).

In this way, the storage battery housing 52 has the storage battery housing air supply port 52g on the bow side and the storage battery housing exhaust port 52h on the stern side. In this case, as illustrated in FIG. 3, a part of the air flowing from the bow side to the stern side in the storage battery compartment 50 above the structure 53 enters inside the storage battery housing 52 through the storage battery housing air supply port 52g. and is discharged to the stern side from the storage battery housing exhaust port 52h. When two storage battery housings 52 are arranged side by side in the front-rear direction as in the present embodiment, the air flowing inside the storage battery housing 52 located on the bow side further flows inside the storage battery housing 52 located on the stern side, and is discharged to the stern side.

Therefore, even if a harmful gas is generated from the storage battery 51 inside the storage battery housing 52 for some reason, the gas can be discharged to the outside of the storage battery housing 52 through the storage battery housing exhaust port 52h, and then discharged to the outside of the ship via the storage battery compartment exhaust pipe 56 on the stern side.

### (3-3. Modification Example of Installation Position of Storage Battery Compartment)

In the configuration illustrated in FIGS. 2 to 4, the fuel cell compartment 30 is located in the hull 1, on the bow side with respect to the tank compartment 40, and the partition wall W2 is located between the fuel cell compartment 30 and the tank compartment 40. The partition wall W2 is a tank isolation partition wall. The partition wall W4 is located on the stern side with respect to the partition wall W2, and the storage battery compartment 50 is installed between the partition wall W2 and the partition wall W4. However, the positional relationship between the partition wall W2 and the partition wall W4 is not limited to the above relationship.

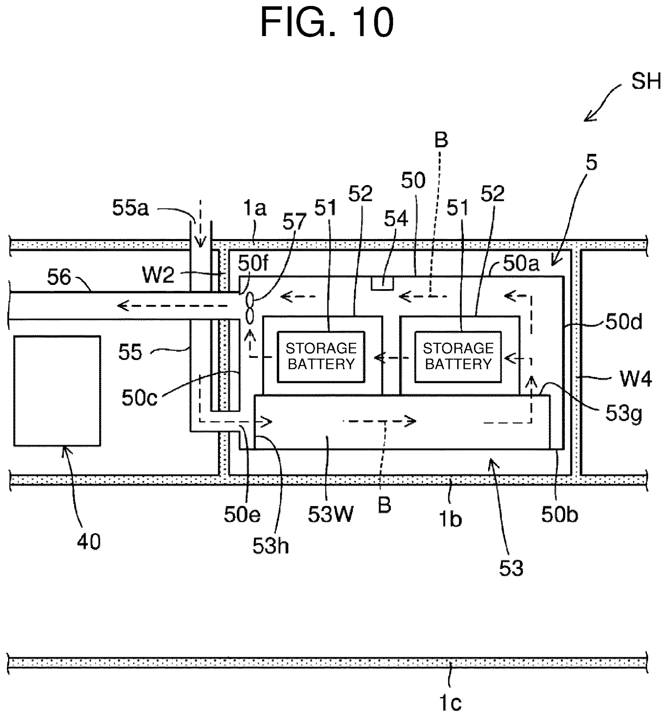

FIG. 10 is an explanatory diagram schematically illustrating a modification of the installation position of the storage battery compartment 50. As illustrated in FIG. 10, the partition wall W4 may be located on the bow side with respect to the partition wall W2. That is, the storage battery compartment 50 installed between the partition wall W2 and the partition wall W4 may be located on the bow side with respect to the partition wall W2 in the hull 1. In other words, the storage battery compartment 50 may be located on the bow side with respect to the tank compartment 40, with the partition wall W2 therebetween.

Whether the storage battery compartment 50 is located on the stern side (see FIG. 2) or the bow side (see FIG. 10) with respect to the partition wall W2 in the hull 1, the effect of the present embodiment of minimizing damage in the unlikely event that the storage battery 51 explodes can be obtained, as long as the storage battery compartment 50 is located between the deck 1a and the ship bottom portion 1c of the hull 1.

### [4. Other]

In the present embodiment, the fuel gas is used as the fuel supplied from the fuel tank 41 to the fuel cell 31, but the fuel is not limited to a gas and may be a liquid. When a liquid fuel is used, if the liquid fuel leaks from a pipe, the leaked liquid fuel vaporizes and becomes a gas (a fuel gas).

In the present embodiment, a configuration in which the fuel cell ship SH has the duct compartment 90 has been described, but the duct compartment 90 need not be installed. For example, by providing vent pipes corresponding to each of the tank compartment 40 and the fuel cell compartment 30, the installation of the duct compartment 90 can be omitted (this is because it is not necessary to provide a flow path from the fuel cell compartment 30 to the vent pipe 10).

Embodiments of the present invention have been described above; however, the scope of the present invention is not limited to these embodiments, and can be extended or modified without departing from the gist of the invention.

### INDUSTRIAL APPLICABILITY

The present invention can be used, for example, in a fuel cell ship.

### REFERENCE SIGNS LIST

- 1: Hull

- 1a: Deck
- 1c: Ship bottom portion
- 6: Propulsion device
- 30: Fuel cell compartment
- 31: Fuel cell
- 40: Tank compartment
- 50: Storage battery compartment
- 50b: Bottom wall
- 51: Storage battery
- 52: Storage battery housing
- 52g: Air supply port
- 52h: Exhaust port
- 53: Structure
- 53W: Outer wall portion
- 55: Storage battery compartment air supply pipe
- 56: Storage battery compartment exhaust pipe
- 57: Exhaust fan
- 70: Lower duct compartment (Duct compartment)
- 80: Upper duct compartment (Duct compartment)
- 90: Duct compartment
- B: Ventilation path
- SH: Fuel cell ship
- W2: Partition wall (Tank isolation partition wall)

## Claims

1. A fuel cell ship (SH) comprising:
a fuel cell (31) that generates electric power by an electrochemical reaction of fuel; and
a propulsion device (6) that generates propulsive force on a hull (1) by electric power supplied from the fuel cell (31), wherein
the fuel cell ship (SH) further comprises a plurality of compartments, including
a storage battery compartment (50) installed with a storage battery (51) that supplies, to the propulsion device (6), electric power different from electric power by the fuel cell (31),
and **characterized in that**
the storage battery compartment (50) is provided between a deck (1a) and a ship bottom portion (1c) of the hull (1), and
the relationship D1 < D2 is met, where D1 is a separation distance (mm) between the storage battery compartment (50) and a deck (1a) in the vertical direction, and D2 is a separation distance (mm) between the storage battery compartment (50) and a ship bottom portion (1c) in the vertical direction.

2. The fuel cell ship (SH) according to claim 1, wherein the storage battery compartment (50) is provided between the deck (1a) and the ship bottom portion (1c), at a position closer to the deck (1a) than the ship bottom portion (1c).

3. The fuel cell ship (SH) according to claim 1, wherein the storage battery compartment (50) is provided between the deck (1a) and the ship bottom portion (1c), at a position closer to the ship bottom portion (1c) than the deck (1a).

4. The fuel cell ship (SH) according to any one of claims 1 to 3, further comprising a storage battery housing (52) that houses the storage battery (51), wherein
the storage battery (51) is installed in the storage battery compartment (50), together with the storage battery housing (52).

5. The fuel cell ship (SH) according to claim 4, further comprising a storage battery compartment exhaust pipe (56) that communicates with the storage battery compartment (50).

6. The fuel cell ship according to claim 5, further comprising an exhaust fan (57) that evacuates inside of the storage battery compartment (50).

7. The fuel cell ship (SH) according to claim 5 or 6, further comprising a storage battery compartment air supply pipe (55) that communicates with the storage battery compartment (50), wherein
the storage battery compartment exhaust pipe (56) and the storage battery compartment air supply pipe (55) are each located on a stern side with respect to the storage battery compartment (50), and
a structure (53) is provided inside the storage battery compartment (50), and the structure (53) is located between a bottom wall (50b) of the storage battery compartment (50) and the storage battery housing (52), and supports the storage battery housing (52) at a position higher than the bottom wall (50b) of the storage battery compartment (50).

8. The fuel cell ship (SH) according to claim 7, wherein the structure (53) has an outer wall portion (53W) that forms an outer wall of a ventilation path (B) through which, in the storage battery compartment (50), air supplied from the storage battery compartment air supply pipe (55) flows downward of the storage battery housing (52), from the stern side to a bow side of the storage battery housing (52).

9. The fuel cell ship (SH) according to claim 8, wherein the outer wall portion (53W) has a frame-shaped cross section perpendicular to a ventilation direction of the air flowing from the stern side to the bow side through the ventilation path (B).

10. The fuel cell ship (SH) according to any one of claims 4 to 9, wherein the storage battery housing (52) has a storage battery housing air supply port on a bow side and a storage battery housing exhaust port on a stern side.

11. The fuel cell ship (SH) according to any one of claims 1 to 10, further comprising:
a fuel cell compartment (30) installed with the fuel cell (31); and
a tank compartment (40) installed with a fuel tank (41) that houses the fuel to be supplied to the fuel cell (31), wherein
in the hull (1), the fuel cell compartment (50) is located on a bow side with respect to the tank compartment (40), and a tank isolation partition wall (W2) is provided between the fuel cell compartment (30) and the tank compartment (40), and
in the hull (1), the storage battery compartment (50) is located on a stern side or the bow side with respect to the tank isolation partition wall (W2).

12. A power generation system comprising:
a fuel cell (31) that generates electric power by an electrochemical reaction of fuel; and
a propulsion device (6) that generates propulsive force on a hull (1) by electric power supplied from the fuel cell (31), wherein
the fuel cell ship (SH) further comprises a plurality of compartments, including
a storage battery compartment (50) installed with a storage battery (51) that supplies, to the propulsion device (6), electric power different from electric power by the fuel cell (31),
and **characterized in that**
the storage battery compartment (50) is provided between a deck (1a) and a ship bottom portion (1c) of the hull (1), and
the relationship D1 < D2 is met, where D1 is a separation distance (mm) between the storage battery compartment (50) and a deck (1a) in the vertical direction, and D2 is a separation distance (mm) between the storage battery compartment (50) and a ship bottom portion (1c) in the vertical direction.
